# EUROPEAN PATENT SPECIFICATION

(11) **EP 3 785 790 B1**
(45) Date of publication and mention of the grant of the patent: **30.07.2025**
(21) Application number: 19211713.3
(22) Date of filing: 27.11.2019
(51) Int. Cl.: B01D 61/36, C02F 1/14, C02F 1/44

(54) **APPARATUSES FOR MEMBRANE DISTILLATION USING SOLAR ABSORBER**
VORRICHTUNGEN ZUR MEMBRANDESTILLATION MIT SOLARABSORBER
APPAREILS DE DISTILLATION À MEMBRANE UTILISANT UN ABSORBEUR SOLAIRE

(30) Priority: 02.09.2019 KR 20190108373
(43) Date of publication of application: 03.03.2021
(73) Proprietor: Korea Institute of Science and Technology, Seoul 02792 (KR)
(72) Inventor: SONG, Kyung Guen, 02792 Seoul (KR); CHOI, Won Jun, 02792 Seoul (KR); SHIN, Jae Won, 02792 Seoul (KR); CHO, Jin-soo, 02792 Seoul (KR); WANG, Dasom, 02792 Seoul (KR)
(74) Representative: advotec.

(56) References cited:
- CN-A- 108 619 914
- KR-B1- 101 444 884
- US-A1- 2011 290 725
- US-A1- 2016 146 507
- YEON SOO JUNG ET AL: "Wearable solar thermoelectric generator driven by unprecedentedly high temperature difference", NANO ENERGY, vol. 40, 1 October 2017 (2017-10-01), pages 663 - 672, XP055696676, ISSN: 2211-2855, DOI: 10.1016/j.nanoen.2017.08.061

## Description

### [Technical Field]

The present disclosure relates to an apparatus for membrane distillation using a solar absorber, and more particularly, to an apparatus for membrane distillation using a solar absorber, in which in the implementation of a membrane distillation process for producing treated water using a temperature difference between raw water and a coolant, raw water is heated using the solar absorber with improved heat collection efficiency, and through this, the treated water production efficiency of the membrane distillation process is improved.

### [Description of government-funded research and development]

This research is made by Korean Institute of Science and Technology and funded by Korea Agency for Infrastructure Technology Advancement, Ministry of Land, Infrastructure and Transport of the Republic of Korea. Research project is Infrastructure technology promotion research (R&D), and project name is Development of membrane distillation water purification technology using multilayer thin film light-absorbing heat generating material for decentralized water supply

### [Background Art]

Membrane distillation (MD) is a process in which separation is driven by a phase change that occurs on the surface of a hydrophobic polymer separation membrane, allowing vapor to pass through micropores on the separation membrane surface to condense, and it is used in the desalination process for separating and removing nonvolatile materials or materials with relatively low volatility, or used to separate organic matters with high volatility in aqueous solutions.

As opposed to the existing process using heat such as multi-stage flash (MSF) and multi effect distillation (MED), membrane distillation does not need to heat water such as seawater and wastewater up to the boiling point, so a lower operating temperature contributes to the energy cost savings, and moreover, the use of a microfiltration membrane having a large pore size eliminates the need for a very high operating pressure like a reverse osmosis (RO) process. Additionally, the fouling problem raised in the existing water treatment process using membranes is not so serious, and many benefits allow it to be used in applications of seawater desalination, water purification and ultrapure water production.

When renewable energy or waste heat is used as a source of heat for membrane distillation, it is possible to greatly reduce energy costs, and thus membrane distillation using waste heat or solar heat have been studied, and methods using solar collectors as an alternative to a source of heat for membrane distillation have been mostly suggested.

There are patents for membrane distillation using solar collectors, for example, KR 1444884 B1, KR 2015 /0 012 576 A1, KR 2015 / 0 012 578 A1, US 8 470 179 B2, US 2013 /0 277 199 A1, CN 108 619 914 A and US 2016/0 146 508 A1. As further non-patent literature Jung, Yeon Soo, et al. "Wearable solar thermoelectric generator driven by unprecedentedly high temperature difference." Nano energy 40 (2017): 663-672 may be considered.

However, the existing solar collectors applied to membrane distillation have low heat collection efficiency and are very much affected by weather, and these disadvantages are factors that reduce the treatment efficiency of the membrane distillation process. Additionally, when the membrane distillation process is performed using solar heat, as it is closer to the sunset time, the membrane distillation efficiency is lower, and a fundamental solution to this problem has not yet been proposed.

### [RELATED LITERATURES]

### [Patent Literatures]

(Patent Literature 1) KR 1444884 B1
(Patent Literature 2) KR 2015 /0 012 576 A1
(Patent Literature 3) KR 2015 / 0 012 578 A1
(Patent Literature 4) US 8 470 179 B2
(Patent Literature 5) US 2013 /0 277 199 A1
(Patent Literature 6) CN 108 619 914 A
(Patent Literature 7) US 2016/0 146 508 A1

### [Non-Patent Literature]

(Non-Patent Literature 1) Jung, Yeon Soo, et al. "Wearable solar thermoelectric generator driven by unprecedentedly high temperature difference." Nano energy 40 (2017): 663-672.

### [Disclosure]

### [Technical Problem]

The present disclosure is designed to solve the above-described problem, and therefore the present disclosure is directed to providing an apparatus for membrane distillation using a solar absorber, in which in the implementation of a membrane distillation process for producing treated water using a temperature difference between raw water and a coolant, raw water is heated using the solar absorber with improved heat collection efficiency, and through this, the treated water production efficiency of the membrane distillation process is improved.

The present disclosure is further directed to providing an apparatus for membrane distillation using a solar absorber, which prevents a sharp reduction in membrane distillation efficiency after sunset, by maintaining the temperature of the raw water for a predetermined time even when sunlight gets weaker after sunset, by the application of a phase change material having heat absorbing and storing properties to the raw water tank.

### [Technical Solution]

To achieve the above-described object, apparatuses as defined in the claims 1 and 3 are proposed.

### [Advantageous Effects]

The apparatus for membrane distillation using a solar absorber according to the present disclosure has the following effects.

It is possible to improve the raw water heating effect by solar heat by the application of the solar absorber with high infrared absorption and the solar heat absorbing device including the same, and based on this, improve the treated water production efficiency of the membrane distillation process.

Along with this, the phase change material having the ability to store and release heat is provided on one side of the raw water tank to prevent a sudden drop in raw water temperature when sunlight gets weaker as sunshine environment changes after sunset, thereby increasing the duration of the membrane distillation process.

### [Description of Drawings]

FIG. 1 is a configuration diagram of an apparatus for membrane distillation using a solar absorber according to a first embodiment of the present disclosure.
FIG. 2 is a configuration diagram of a raw water tank according to a first embodiment provided with a phase change material.
FIG. 3 is a configuration diagram of an apparatus for membrane distillation using a solar absorber according to a variation of a first embodiment of the present disclosure.
FIG. 4 is a configuration diagram of an apparatus for membrane distillation using a solar absorber according to a second embodiment of the present disclosure.
FIG. 5 is a configuration diagram of a raw water tank according to a second embodiment provided with a solar heat absorbing device and a phase change material.
FIG. 6 is a configuration diagram of an apparatus for membrane distillation using a solar absorber according to a variation of a second embodiment of the present disclosure.
FIG. 7 shows experimental results of changes in measured temperature of raw water with and without a solar heat absorbing device.
FIG. 8 shows experimental results of amounts of treated water produced by an apparatus for membrane distillation with an existing solar collector and an apparatus for membrane distillation according to the present disclosure.

### [Best Mode]

The present disclosure proposes technology for, in the implementation of a membrane distillation (MD) process, improving the treated water production efficiency of the membrane distillation process by heating raw water using a solar absorber and maintaining the temperature of the heated raw water for a predetermined time or more through a phase change material.

As mentioned previously in the section 'background', the membrane distillation process is a process that produces treated water from raw water by inducing a partial vapor pressure difference through a temperature difference between raw water and coolant, to cause vapor of the raw water to pass through a MD separation membrane.

To improve the treated water production efficiency of the membrane distillation process, a large temperature difference between raw water and coolant is required, and the membrane distillation process using solar heat requires an extended period of time during which a temperature difference between raw water and coolant is maintained.

In the membrane distillation process using solar heat, at noon, a temperature difference between raw water and coolant is greatest and the membrane distillation efficiency is maximum, and as it is closer to the sunset time in the afternoon, a temperature difference between raw water and coolant gradually reduces and the membrane distillation efficiency tends to reduce. Accordingly, to increase the efficiency of the membrane distillation process using solar heat, it is necessary to maximize a temperature difference between raw water and coolant and prolong the time during which the temperature difference between raw water and coolant is maintained to enable the membrane distillation process.

The present disclosure proposes technology that maximizes a temperature difference between raw water and coolant using a new solar absorber, and prolongs the time during which the temperature difference between raw water and coolant is maintained by using a phase change material.

Hereinafter, an apparatus for membrane distillation using a solar absorber according to first and second embodiments of the present disclosure will be described in detail with reference to the accompanying drawings. The first embodiment is the heating of raw water using a solar heat absorbing device and a raw water circulation pipe, and the second embodiment is a combination of a raw water tank with a solar heat absorbing device. First, the first embodiment is described as below.

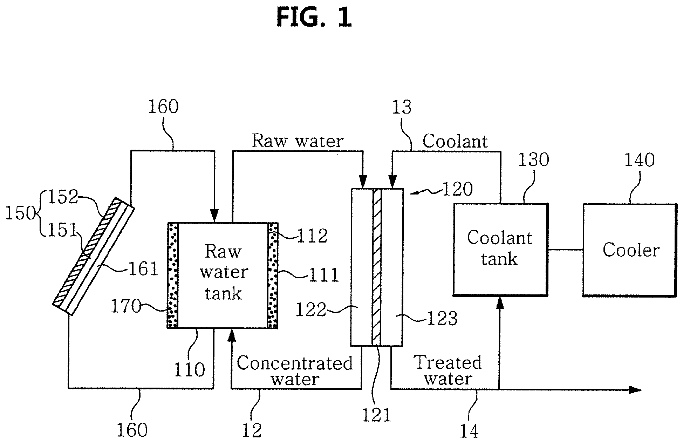

Referring to FIG. 1, the apparatus for membrane distillation using a solar absorber according to the first embodiment of the present disclosure includes a raw water tank 110, a membrane distillation module, a coolant tank 130, a solar heat absorbing device 150 and a raw water circulation pipe 160.

The raw water tank 110 serves to store raw water to be treated and supply the raw water to the membrane distillation module, and the coolant tank 130 serves to supply a coolant to the membrane distillation module and collect treated water produced by the membrane distillation module. The membrane distillation module serves to produce treated water from the raw water by allowing vapor of the raw water to pass through a MD separation membrane 121 through a partial vapor pressure difference resulting from a temperature difference between the raw water and the coolant.

A raw water supply pipe 11 and a concentrated water pipe 12 are provided between the raw water tank 110 and the membrane distillation module, and a coolant supply pipe 13 and a treated water pipe 14 are provided between the coolant tank 130 and the membrane distillation module. The raw water in the raw water tank 110 is supplied to the membrane distillation module through the raw water supply pipe 11, and raw water after separation of treated water, i.e., concentrated water moves to the raw water tank 110 through the concentrated water pipe 12. Additionally, the coolant in the coolant tank 130 is supplied to the membrane distillation module through the coolant supply pipe 13, and treated water produced by the membrane distillation module, i.e., treated water separated from the raw water moves to the coolant tank 130 through the treated water pipe 14. A cooler 140 may be provided on one side of the coolant tank 130 to cool the coolant within the coolant tank 130.

To enable the treated water production by the membrane distillation module, i.e., to enable the membrane distillation process by the membrane distillation module, the temperature of the raw water should be higher than the temperature of the coolant, and accordingly, it is necessary to heat the raw water above a predetermined temperature.

To heat the raw water, the solar heat absorbing device 150 and the raw water circulation pipe 160 are provided. In detail, as shown in FIG. 1, the raw water circulation pipe 160 where the raw water enters and exits is provided on one side of the raw water tank. The raw water circulation pipe 160 serves to supply the heated raw water to the raw water tank and circulate the cooled raw water in the raw water tank, and the raw water is heated by the solar heat absorbing device 150.

Two ends of the raw water circulation pipe 160 are each connected to the inlet side and the outlet side of the raw water tank, and the solar heat absorbing device 150 is provided in a position of the raw water circulation pipe 160. The solar heat absorbing device 150 is provided on a position of the raw water circulation pipe 160 to heat the raw water circulating along the raw water circulation pipe 160.

To increase the raw water heating effect by the solar heat absorbing device 150, a larger heat absorbing area is better, and to this end, a raw water storage channel 161 having a predetermined area may be provided in part of the raw water circulation pipe 160. With the raw water storage channel 161 having the predetermined area, the thermal contact time between the solar heat absorbing device 150 and the raw water increases, thereby effectively heating the raw water.

The solar heat absorbing device 150 provided on the raw water circulation pipe 160, to be exact, the solar heat absorbing device 150 provided on the raw water storage space of the raw water circulation pipe 160, has the following configuration.

The solar heat absorbing device 150 includes a metal plate 151 and a solar absorber 152.

The metal plate 151 serves to provide a mounting space for the solar absorber, and is provided on the raw water storage channel 161 to heat the raw water in the raw water storage channel 161 using the solar heat absorbed by the solar absorber. The metal plate 151 may be made of a metal having high thermal conductivity, for example, copper and aluminum.

The solar absorber is provided on the metal plate 151, and absorbs solar heat and transfers the absorbed solar heat to the raw water storage channel 161 through the metal plate 151, and the solar absorber has a structure in which a so-called Ti-MgF₂ double layer including a MgF₂ layer on a Ti layer is repeatedly stacked. The MgF₂ layer is a dielectric and has excellent infrared absorbing properties, and the Ti layer serves to transfer heat of infrared radiation absorbed by the MgF₂ layer. Because the solar absorber is formed by repeatedly stacking the Ti-MgF₂ double layer, it is possible to improve the absorption efficiency of solar infrared radiation, and through this, effectively heat the raw water in the raw water storage channel 161. In an embodiment, in the Ti-MgF₂ double layer, the Ti layer may be formed with the thickness of 10 nm, the MgF₂ layer may be formed with the thickness of 320 nm, and the solar absorber may be completed by repeatedly stacking the Ti-MgF₂ double layer 10 times.

The raw water in the raw water storage channel 161 heated through the solar heat absorbing device 150 is supplied to the raw water tank through the raw water circulation pipe 160, and accordingly, the membrane distillation process by a temperature difference between the raw water and the coolant can be smoothly performed.

To prevent the raw water in the raw water tank from being cooled down, as described above, the raw water circulation pipe 160 is also provided on the outlet side of the raw water tank, and the raw water going out of the outlet side of the raw water tank goes into the raw water storage channel 161 again and is re-heated by the solar heat absorbing device 150.

Meanwhile, because the raw water is heated by the solar heat absorbing device 150, as it is closer to the sunset time, sunlight gets weaker, and accordingly a temperature difference between the raw water and the coolant gradually reduces. That is, as it is closer to the sunset time, the temperature of the raw water in the raw water tank 110 is lower, and thus a temperature difference between the raw water and the coolant is smaller, which reduces the membrane distillation efficiency or makes it difficult to perform the membrane distillation process itself. This is because the heating of the raw water is the heating by solar heat.

To smoothly perform the membrane distillation process even when sunlight gets weaker as it is closer to the sunset time, a phase change material (PCM) 170 is provided on one side of the raw water tank 110.

The phase change material is a material that changes in phase between solid and liquid, and the material is a solid below the melting point and a liquid above the melting point, and has properties that it absorbs and stores heat when it is in a liquid state at temperatures above the melting point and releases the stored heat at temperatures below the melting point. Accordingly, the surrounding environment can be maintained at a predetermined temperature or above through the phase change material.

When this is applied to the present disclosure, it is possible to prevent a sharp reduction in raw water temperature caused by a sunshine environment change, for example, sunset, through the phase change material, and ultimately, prolong the time during which a temperature difference between raw water and coolant is maintained through the phase change material, thereby increasing the duration and efficiency of the membrane distillation process.

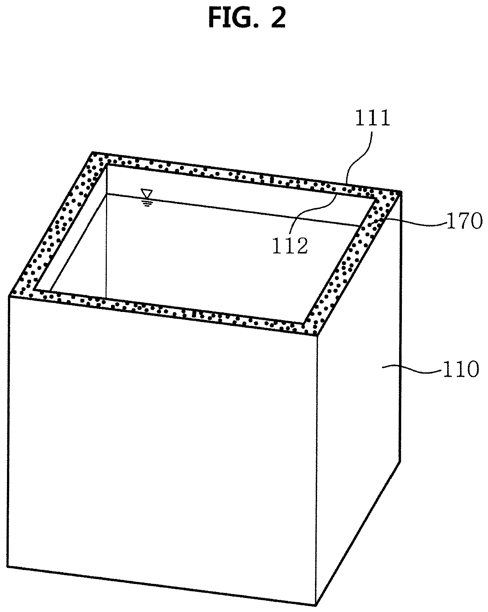

In detail, the phase change material is provided in the raw water tank 110 according to the following configuration. The configuration in which the phase change material is provided in the raw water tank 110 is classified into two embodiments. In the first embodiment, as shown in FIGS. 1 and 2, an inner wall 112 is provided at a location spaced apart from an inner surface 111 of the raw water tank 110, and the phase change material 170 is provided in a space between the inner surface 111 and the inner wall 112. The space between the inner surface 111 and the inner wall 112 is separated from a space in which the raw water of the raw water tank 110 is provided, and accordingly the phase change material 220 present between the inner surface 111 and the inner wall 112 does not leak to the space in which the raw water of the raw water tank 110 is provided. In this configuration, the phase change material 170 surrounds around the raw water tank 110. The phase change material 170 is provided such that it surrounds around the raw water tank 110 in which the raw water is stored, thereby effectively absorbing heat from the raw water and releasing heat into the raw water.

The phase change material 170 provided between the inner surface 111 and the inner wall 112 may be provided in the form of an emulsion or a capsule. That is, the phase change material may be dissolved in a fluid in the form of an emulsion, or the phase change material capsule may be dispersed in a fluid. Here, the phase change material capsule refers to a capsule as a result of encapsulating the phase change material.

In the second embodiment, the phase change material capsule may be directly fed into the raw water in the raw water tank 110. In this case, a baffle may be installed on the inlet and outlet side of the raw water tank 110 to prevent a loss of the phase change material capsule from the raw water tank 110.

The phase change material provided in the raw water tank 110 according to the above-described two embodiments should be optimized for the membrane distillation process. It is known that the melting point of the phase change material is between -10°C and 60°C according to materials. Considering that a coolant used in the membrane distillation process is water of the room temperature, the phase change material applied to the raw water tank 110 of the present disclosure may be a phase change material having the melting point of between 20°C and 60°C. Additionally, the phase change material is classified into an organic PCM, an inorganic PCM and a eutectic PCM, and the phase change material having the melting point of between 20°C and 60°C may be applied to the raw water tank 110 of the present disclosure irrespective of classification.

Hereinabove, the entire configuration of the apparatus for membrane distillation using a solar absorber according to the first embodiment of the present disclosure has been described. The operation of the apparatus for membrane distillation using a solar absorber according to the first embodiment of the present disclosure having the above-described configuration, i.e., a method for membrane distillation is performed as below.

First, raw water to be treated is supplied and stored in the raw water tank 110. The raw water in the raw water tank enters and exits the raw water circulation pipe 160, and the raw water is heated by the solar heat absorbing device 150 while circulating along the raw water circulation pipe 160. Additionally, with the phase change material provided on one side of the raw water tank, when the temperature of the raw water is equal to or higher than a predetermined temperature, the phase change material absorbs heat of the raw water and stores the heat.

In detail, under a structure in which the raw water storage channel 161 is provided in part of the raw water circulation pipe 160, and the solar heat absorbing device 150 including the metal plate 151 and the solar absorber is provided on the raw water storage channel 161, the raw water is heated by the solar heat collected by the solar heat absorbing device 150 while passing through the raw water storage channel 161, and the heated raw water is supplied to the raw water tank. Additionally, the cooled raw water in the raw water tank re-circulates along the raw water circulation pipe 160 and is re-heated by the solar heat absorbing device 150.

The phase change material provided in the raw water tank 110 absorbs heat of the raw water and stores the heat when the temperature of the raw water is equal to or higher than the melting point of the phase change material, and releases the stored heat when the temperature of the raw water is lower than the melting point of the phase change material. As the phase change material works in this way, it is possible to prevent a sudden drop in raw water temperature.

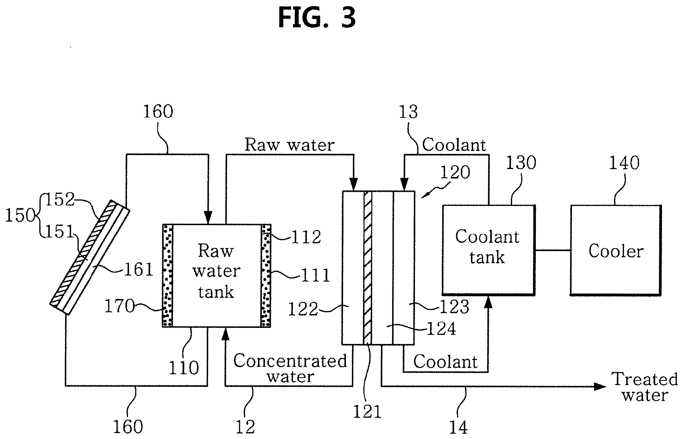

The raw water heated by the solar heat absorbing device 150 is supplied to the membrane distillation module 120. The membrane distillation module 120 may have direct contact membrane distillation (DCMD) in which the raw water and the coolant are in direct contact with the MD separation membrane 121, air gap membrane distillation (AGMD) (see FIG. 3) having an air gap (124 in FIG. 3) between the MD separation membrane 121 and the coolant, vacuum membrane distillation (VMD) or sweep gas membrane distillation (SGMD) configuration, and for convenience of description, the following description will be made based on a direct contact membrane distillation apparatus.

The raw water heated by the solar heat absorbing device 150, for example, the raw water of between 40°C and 70°C, is supplied to a raw water channel 122 of the membrane distillation module 120 through the raw water supply pipe 11. At the same time, the coolant in the coolant tank 130 is supplied to a coolant channel 123 of the membrane distillation module 120. In this instance, the coolant may be adjusted to the room temperature of about 20°C through the cooler 140. When the raw water and the coolant contact each other with the MD separation membrane 121 interposed between, the raw water evaporates due to a temperature difference between the raw water and the coolant, vapor moves to the coolant channel 123 through the MD separation membrane 121, and treated water having moved to the coolant channel 123 moves to the coolant tank 130 or a treated water tank through the treated water pipe 14. Additionally, raw water after separation of treated water, i.e., concentrated water moves to the raw water tank 110 through the concentrated water pipe 12.

Hereinabove, the apparatus for membrane distillation using a solar absorber according to the first embodiment of the present disclosure and the method for membrane distillation using the same have been described. Next, an apparatus for membrane distillation using a solar absorber according to a second embodiment of the present disclosure and a method for membrane distillation using the same will be described below.

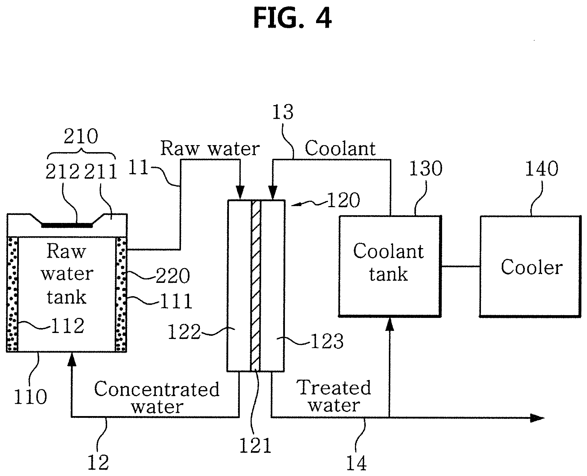

Referring to FIG. 4, the apparatus for membrane distillation using a solar absorber according to the second embodiment of the present disclosure includes a raw water tank 110, a membrane distillation module and a coolant tank 130.

The raw water tank 110 serves to store raw water to be treated and supply the raw water to the membrane distillation module, and the coolant tank 130 serves to supply a coolant to the membrane distillation module and collect treated water produced by the membrane distillation module. The membrane distillation module serves to produce treated water from the raw water by allowing vapor of the raw water to pass through a **MD** separation membrane 121 through a partial vapor pressure difference resulting from a temperature difference between the raw water and the coolant.

A raw water supply pipe 11 and a concentrated water pipe 12 are provided between the raw water tank 110 and the membrane distillation module, and a coolant supply pipe 13 and a treated water pipe 14 are provided between the coolant tank 130 and the membrane distillation module. The raw water in the raw water tank 110 is supplied to the membrane distillation module through the raw water supply pipe 11, and raw water after separation of treated water, i.e., concentrated water moves to the raw water tank 110 through the concentrated water pipe 12. Additionally, the coolant in the coolant tank 130 is supplied to the membrane distillation module through the coolant supply pipe 13, and treated water produced by the membrane distillation module, i.e., treated water separated from the raw water moves to the coolant tank 130 through the treated water pipe 14. A cooler 140 may be provided on one side of the coolant tank 130 to cool the coolant within the coolant tank 130.

To enable the treated water production by the membrane distillation module, i.e., to enable the membrane distillation process by the membrane distillation module, the temperature of the raw water should be higher than the temperature of the coolant, and accordingly, it is necessary to heat the raw water above a predetermined temperature.

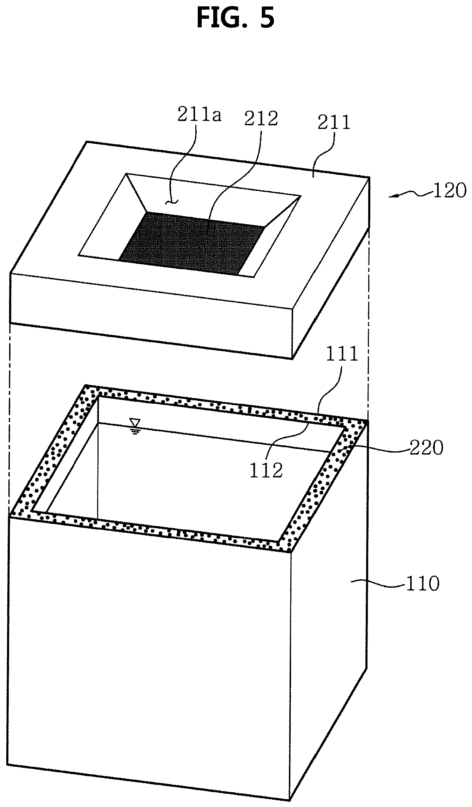

To heat the raw water, the raw water tank 110 is provided with a solar heat absorbing device 210. In detail, as shown in FIGS. 4 and 5, the solar heat absorbing device 210 is provided on the upper surface of the raw water tank 110. The solar heat absorbing device 210 is configured to collect solar heat and heat the raw water tank 110, and includes a metal plate 211 and a solar absorber 212.

The metal plate 211 is mounted on the upper surface of the raw water tank 110 to provide a seating space for the solar absorber 212, and serves to collect solar heat and guide the collected solar heat to be absorbed by the solar absorber 212. Along with this, the metal plate 211 serves to transfer the solar heat absorbed by the solar absorber 212 to the raw water tank 110.

In addition to providing the seating space for the solar absorber 212, to collect solar heat, the metal plate 211 has a tapered groove 211a at the center, and the solar absorber 212 is seated in the groove 211a. The groove 211a formed at the center of the metal plate 211 has a tapered shape to effectively collect solar heat, and the collected solar heat is effectively absorbed by the solar absorber 212.

The metal plate 211 may be made of a metal having high thermal conductivity, for example, copper and aluminum, and to increase the heating effect of the raw water tank 110, the metal plate 211 may be disposed over the entire upper surface of the raw water tank 110.

The solar absorber 212 absorbs solar heat and transfers the absorbed solar heat to the raw water tank 110 through the metal plate 211, and the solar absorber 212 has a structure in which a so-called Ti-MgF₂ double layer including a MgF₂ layer on a Ti layer is repeatedly stacked. The MgF₂ layer is a dielectric and has excellent infrared absorbing properties, and the Ti layer serves to transfer heat of infrared radiation absorbed by the MgF₂ layer. As the solar absorber 212 is formed by repeatedly stacking the Ti-MgF₂ double layer, it is possible to improve the absorption efficiency of solar infrared radiation, and through this, effectively heat the raw water tank 110. In an embodiment, in the Ti-MgF₂ double layer, the Ti layer may be formed with the thickness of 10 nm and the MgF₂ layer may be formed with the thickness of 320 nm, and the solar absorber 212 may be completed by repeatedly stacking the Ti-MgF₂ double layer 10 times.

The solar heat absorbing device 210 as described above, i.e., the solar heat absorbing device 210 including the metal plate 211 and the solar absorber 212 may be mounted on the upper surface of the raw water tank 110 as well as the side of the raw water tank 110.

Through the solar heat absorbing device 210, it is possible to effectively heat the raw water in the raw water tank 110, and through this, induce a temperature difference between the raw water and the coolant, thereby enabling the membrane distillation process by the membrane distillation module.

Meanwhile, because the raw water is heated by the solar heat absorbing device 210, as it is closer to the sunset time, sunlight gets weaker, and accordingly a temperature difference between the raw water and the coolant gradually reduces. That is, as it is closer to the sunset time, the temperature of the raw water in the raw water tank 110 is lower, and thus a temperature difference between the raw water and the coolant reduces, which reduces the membrane distillation efficiency or makes it difficult to perform the membrane distillation process itself. This is because the heating of the raw water is the heating by solar heat.

To smoothly perform the membrane distillation process even when sunlight gets weaker as it is closer to the sunset time, a phase change material 220 is provided on one side of the raw water tank 110.

The phase change material is a material that changes in phase between solid and liquid, and the material is a solid below the melting point and a liquid above the melting point, and has properties that it absorbs and stores heat when it is in a liquid state at temperatures above the melting point and releases the stored heat at temperatures below the melting point. Accordingly, the surrounding environment can be maintained at a predetermined temperature or above through the phase change material.

When this is applied to the present disclosure, it is possible to prevent a sharp reduction in raw water temperature caused by a sunshine environment change, for example, sunset, through the phase change material, and ultimately, prolong the time during which a temperature difference between raw water and coolant is maintained through the phase change material, thereby increasing the duration and efficiency of the membrane distillation process.

In detail, the phase change material is provided in the raw water tank 110 in the following configuration. The configuration in which the phase change material is provided in the raw water tank 110 is classified into two embodiments. In the first embodiment, as shown in FIGS. 4 and 5, an inner wall 112 is provided at a location spaced apart from an inner surface 111 of the raw water tank 110, and the phase change material 220 is provided in a space between the inner surface 111 and the inner wall 112. The space between the inner surface 111 and the inner wall 112 is separated from a space in which the raw water of the raw water tank 110 is provided, and accordingly the phase change material 220 present between the inner surface 111 and the inner wall 112 does not leak to the space in which the raw water of the raw water tank 110 is provided. In this configuration, the phase change material 220 surrounds around the raw water tank 110. The phase change material 220 is provided such that it surrounds around the raw water tank 110 in which the raw water is stored, thereby effectively absorbing heat from the raw water and releasing heat into the raw water.

The phase change material 220 provided between the inner surface 111 and the inner wall 112 may be provided in the form of an emulsion or a capsule. That is, the phase change material may be dissolved in a fluid in the form of an emulsion, or the phase change material capsule may be dispersed in a fluid. Here, the phase change material capsule refers to a capsule as a result of encapsulating the phase change material.

In the second embodiment, the phase change material capsule may be directly fed into the raw water in the raw water tank 110. In this case, a baffle may be installed on the inlet and outlet side of the raw water tank 110 to prevent a loss of the phase change material capsule from the raw water tank 110.

The phase change material provided in the raw water tank 110 according to the above-described two embodiments should be optimized for the membrane distillation process. It is known that the melting point of the phase change material is between -10°C and 60°C according to materials. Considering that a coolant used in the membrane distillation process is water of the room temperature, the phase change material applied to the raw water tank 110 of the present disclosure may be a phase change material having the melting point of between 20°C and 60°C. Additionally, the phase change material is classified into an organic PCM, an inorganic PCM and a eutectic PCM, and the phase change material having the melting point of between 20°C and 60°C may be applied to the raw water tank 110 of the present disclosure irrespective of classification.

Hereinabove, the entire configuration of the apparatus for membrane distillation using a solar absorber according to the second embodiment of the present disclosure has been described. A method for membrane distillation using a solar absorber according to the second embodiment of the present disclosure is performed as below.

First, raw water to be treated is supplied and stored in the raw water tank 110. Under a structure in which the solar heat absorbing device 210 including the metal plate 211 and the solar absorber 212 is provided on the upper surface of the raw water tank 110, and the phase change material is provided between the inner surface 111 and the inner wall 112 of the raw water tank 110, the raw water in the raw water tank 110 is heated by solar heat collection, absorption and transfer by the solar heat absorbing device 210, and when the temperature of the raw water is equal to or higher than a predetermined temperature, the phase change material absorbs heat of the raw water and stores the heat.

In detail, the tapered groove 211a provided in the metal plate 211 collects solar heat, the solar absorber 212 seated in the groove 211a absorbs the collected solar heat, and the solar heat absorbed by the solar absorber 212 is transferred to the raw water in the raw water tank 110 through the metal plate 211, so the raw water is heated by the solar heat.

The phase change material provided in the raw water tank 110 according to various configurations (the above-described two embodiments) absorbs heat of the raw water and stores the heat when the temperature of the raw water is equal to or higher than the melting point of the phase change material, and releases the stored heat when the temperature of the raw water is lower than the melting point of the phase change material. As the phase change material works in this way, it is possible to prevent a sudden drop in raw water temperature.

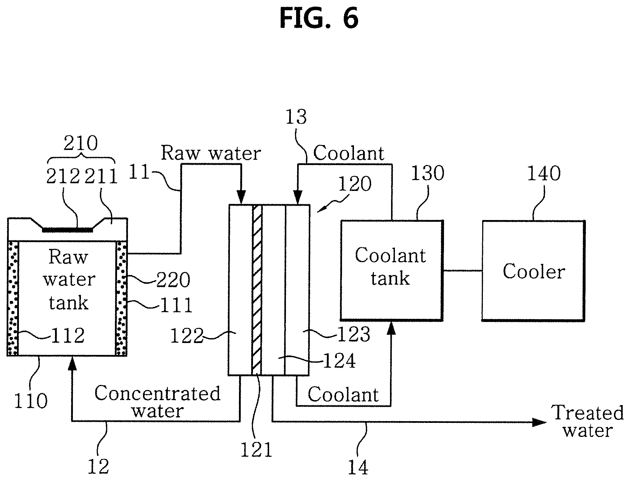

The raw water heated by the solar heat absorbing device 210 is supplied to the membrane distillation module 120. The membrane distillation module 120 may have direct contact membrane distillation (DCMD) in which raw water and coolant are in direct contact with the MD separation membrane 121, air gap membrane distillation (AGMD) (see FIG. 6) having an air gap (124 in FIG. 6) between the MD separation membrane 121 and the coolant, vacuum membrane distillation (VMD) or sweep gas membrane distillation (SGMD) configuration, and for convenience of description, the following description will be made based on a direct contact membrane distillation apparatus.

The raw water heated by the solar heat absorbing device 210, for example, the raw water of between 40°C and 70°C, is supplied to a raw water channel 122 of the membrane distillation module 120 through the raw water supply pipe 11. At the same time, the coolant in the coolant tank 130 is supplied to a coolant channel 123 of the membrane distillation module 120. In this instance, the coolant may be adjusted to the room temperature of about 20°C through the cooler 140. When the raw water and the coolant contact each other with the MD separation membrane 121 interposed between, the raw water evaporates due to a temperature difference between the raw water and the coolant, vapor moves to the coolant channel 123 through the MD separation membrane 121, and treated water having moved to the coolant channel 123 moves the coolant tank 130 or a treated water tank through the treated water pipe 14. Additionally, raw water after separation of treated water, i.e., concentrated water moves to the raw water tank 110 through the concentrated water pipe 12.

Hereinabove, the apparatus for membrane distillation using a solar absorber according to the first and second embodiments of the present disclosure has been described. Hereinafter, the present disclosure will be described in more detail through experimental examples.

### <Experimental example 1: Raw water heating property by a solar heat absorbing device>

The raw water heating property by solar heat of a raw water tank with a solar heat absorbing device and a raw water tank without a solar heat absorbing device is investigated. A solar absorber having the heat collection area of 63.53 cm² is placed, a channel below the solar absorber is filled with water of 190 mL, and after sunlight irradiation of 1 sun solar irradiance, changes in water temperature over time are measured. The solar absorber used in the experiment has a structure in which a 10 nm Ti layer and a 320 nm MgF₂ layer are stacked in an alternating manner 10 times.

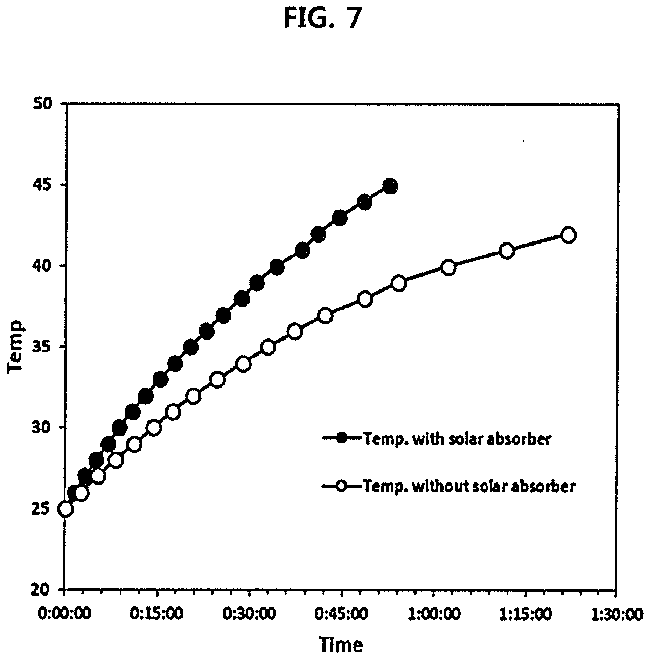

Referring to FIG. 7, with no solar absorber, the water temperature is 25°C before sunlight irradiation and rises to 40°C in 1 hour after sunlight irradiation. In contrast, with the solar absorber, the water temperature of the heater is equally 25°C before sunlight irradiation and rises to 40°C in 34 min after sunlight irradiation, and thus the water temperature rise is faster about twice, and it can be seen that the heat collection efficiency of the solar absorber is very high.

### <Experimental example 2: Membrane distillation efficiency of an apparatus for membrane distillation with a solar heat absorbing device>

The membrane distillation efficiency of an apparatus for membrane distillation with an existing solar collector and an apparatus for membrane distillation with a solar absorber according to the present disclosure is investigated.

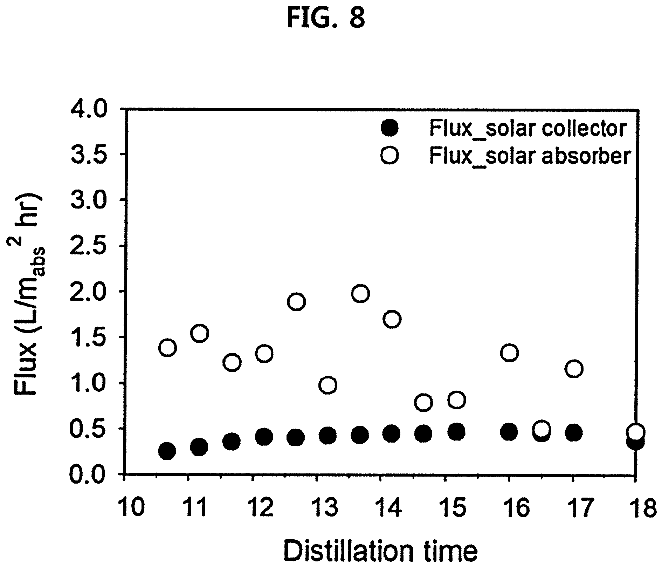

Referring to FIG. 8, it is found that an amount of treated water produced by the apparatus for membrane distillation with the solar absorber of the present disclosure is 9.0 L/m_{abs}²•hr on the average for 8 hours from 10 a.m. to 6 p.m., and an amount of treated water produced by the apparatus for membrane distillation with the existing collector is 4.2 L/m_{abs}²•hr. Accordingly, it can be seen that an amount of treated water produced is very high due to the high heat collection efficiency of the solar absorber of the present disclosure.

**[Detailed Description of Main Elements]**

| | | | |
|---|---|---|---|
| 11: | Raw water supply pipe | 12: | Concentrated water pipe |
| 13: | Coolant supply pipe | 14: | Treated water pipe |
| 110: | Raw water tank | 111: | Inner surface of raw water tank |
| 112: | Inner wall of raw water tank | 120: | Membrane distillation module |
| 121: | MD separation membrane | 122: | Raw water channel |
| 123: | Coolant channel | 124: | Air gap |
| 130: | Coolant tank | 140: | Cooler |
| 160: | Raw water circulation pipe | 161: | Raw water storage channel |
| 150, 210: | Solar heat absorbing device | | |
| 151, 211: | Metal plate | | |
| 211a: | Groove | | |
| 152, 212: | Solar absorber | | |
| 170, 220: | Phase change material | | |

## Claims

1. An apparatus for membrane distillation using a solar absorber (152,212), comprising:
a raw water circulation pipe (160) to circulate raw water in a raw water tank;
a solar heat absorbing device (150,210) provided on one side of the raw water circulation pipe (160) to heat the raw water in the raw water circulation pipe (160);
a raw water tank (110) to receive the raw water heated by the solar heat absorbing device (150,210) through the raw water circulation (160) pipe and to supply the raw water to a membrane distillation module (120);
the membrane distillation module (120) to produce treated water from the raw water through a membrane distillation process; and
a coolant tank (130) to supply a coolant to the membrane distillation module (120) and to collect the treated water produced by the membrane distillation module (120),
wherein a phase change material (170,220) is provided on one side of the raw water tank (110), and
the phase change material (170,220) is adapted to absorb heat of the raw water and is adapted to store the heat when a temperature of the raw water is equal to or higher than a melting point of the phase change material (170,220) of between 20°C and 60°C, and is adapted to release the stored heat when the temperature of the raw water is lower than the melting point of the phase change material (170,220),
wherein an inner wall (112) is provided at a location spaced from an inner surface (111) of the raw water tank (110), and the phase change material (170,220) is provided in a space between the inner surface (111) and the inner wall (112),
the phase change material (170,220) provided between the inner surface (111) and the inner wall (112) surrounds the raw water of the raw water tank (110), and
the space between the inner surface (111) and the inner wall (112) is spatially separated from a space in which the raw water of the raw water tank (110) is provided.

2. The apparatus for membrane distillation using a solar absorber (152,212) according to claim 1, wherein a raw water storage channel (161) is provided in part of the raw water circulation pipe (160), and the solar heat absorbing device (150,210) is provided on the raw water storage channel (161), and
the solar heat absorbing device (150,210) includes a metal plate (151,211) provided on the raw water storage channel (161) to transfer solar heat absorbed by the solar absorber (152,212) to the raw water in the raw water storage channel (161), and the solar absorber (152,212) provided on the metal plate (151,211) to absorb the solar heat.

3. An apparatus for membrane distillation using a solar absorber (152,212), comprising:
a raw water tank (110) provided with a solar heat absorbing device (150,210) to supply raw water heated by the solar heat absorbing device (150,210) to a membrane distillation module (120);
the membrane distillation module (120) to produce treated water from the raw water through a membrane distillation process; and
a coolant tank (130) to supply a coolant to the membrane distillation module (120) and to collect the treated water produced by the membrane distillation module (120),
wherein the solar heat absorbing device (150,210) is provided on an upper surface or a side of the raw water tank (110),
wherein a phase change material (170,220) is provided on one side of the raw water tank (110), and
the phase change material (170,220) is adapted to absorb heat of the raw water and is adapted to store the heat when a temperature of the raw water is equal to or higher than a melting point of the phase change material (170,220) of between 20°C and 60°C, and is adapted to release the stored heat when the temperature of the raw water is lower than the melting point of the phase change material (170,220),
wherein an inner wall (112) is provided at a location spaced from an inner surface of the raw water tank (110), and the phase change material (170,220) is provided in a space between the inner surface (111) and the inner wall (112),
the phase change material (170,220) provided between the inner surface and the inner wall (112) surrounds the raw water of the raw water tank (110), and
the space between the inner surface (111) and the inner wall (112) is spatially separated from a space in which the raw water of the raw water tank (110) is provided.

4. The apparatus for membrane distillation using a solar absorber (152,212) according to claim 3, wherein the solar heat absorbing device (150,210) includes a metal plate (151, 211) mounted on the upper surface or the side of the raw water tank (110) to provide a seating space for the solar absorber (152,212) and collect solar heat, and the solar absorber (152,212) provided in a groove of the metal plate (151,211) to absorb the collected solar heat.

5. The apparatus for membrane distillation using a solar absorber (152,212) according to one of claims 1 to 4, wherein the solar absorber (152,212) has a structure in which a Ti-MgF₂ double layer including a MgF₂ layer on a Ti layer is repeatedly stacked multiple times.

6. The apparatus for membrane distillation using a solar absorber (152,212) according to claim 4, wherein the metal plate (151,211) has the tapered groove (211a) at a center, and the solar absorber (152,212) is seated in the groove (211a).

7. The apparatus for membrane distillation using a solar absorber (152,212) according to claim 1 or 3, wherein the phase change material (170,220) is provided such that the phase change material (170,220) is dissolved in a fluid in a form of an emulsion, or a phase change material (170,220) capsule is dispersed in a fluid.

8. The apparatus for membrane distillation using a solar absorber (152,212) according to one of claims 1 to 7, wherein the membrane distillation module (120) has any one configuration of direct contact membrane distillation (DCMD), air gap membrane distillation (AGMD), vacuum membrane distillation (VMD), and sweep gas membrane distillation (SGMD).

## Patentansprüche

1. Vorrichtung zur Membrandestillation mit einem Solarabsorber (152, 212), umfassend:
eine Rohwasserzirkulationsleitung (160) zur Zirkulation von Rohwasser in einem Rohwassertank;
eine auf einer Seite der Rohwasserzirkulationsleitung (160) vorgesehene Solarwärmeabsorptionsvorrichtung (150, 210) zur Erhitzung des Rohwassers in der Rohwasserzirkulationsleitung (160);
einen Rohwassertank (110) zur Annahme des durch die Solarwärmeabsorptionsvorrichtung (150, 210) erhitzten Rohwassers über die Rohwasserzirkulationsleitung (160) und zur Versorgung eines Membrandestillationsmoduls (120) mit dem Rohwasser;
das Membrandestillationsmodul (120) zur Herstellung von aufbereitetem Wasser aus dem Rohwasser durch einen Membrandestillationsprozess; und
einen Kühlmitteltank (130) zur Versorgung des Membrandestillationsmoduls (120) mit einem Kühlmittel und zum Auffangen des durch das Membrandestillationsmodul (120) hergestellten aufbereiteten Wassers,
wobei auf einer Seite des Rohwassertanks (110) ein Phasenübergangsmaterial (170, 220) vorgesehen ist und
das Phasenübergangsmaterial (170, 220) dazu ausgebildet ist, Wärme des Rohwassers zu absorbieren, und dazu ausgebildet ist, die Wärme zu speichern, wenn eine Temperatur des Rohwassers höher als ein Schmelzpunkt des Phasenübergangsmaterials (170, 220) zwischen 20 °C und 60 °C ist oder diesem entspricht, und dazu ausgebildet ist, die gespeicherte Wärme abzugeben, wenn die Temperatur des Rohwassers niedriger als der Schmelzpunkt des Phasenübergangsmaterials (170, 220) ist, wobei an einer von einer Innenseite (111) des Rohwassertanks (110) beabstandeten Stelle eine Innenwand (112) vorgesehen ist und das Phasenübergangsmaterial (170, 220) in einem Zwischenraum zwischen der Innenseite (111) und der Innenwand (112) vorgesehen ist,
das zwischen der Innenseite (111) und der Innenwand (112) vorgesehene Phasenübergangsmaterial (170, 220) das Rohwasser des Rohwassertanks (110) umgibt und der Zwischenraum zwischen der Innenseite (111) und der Innenwand (112) von einem Raum, in dem das Rohwasser des Rohwassertanks (110) vorgesehen ist, räumlich getrennt ist.

2. Vorrichtung zur Membrandestillation mit einem Solarabsorber (152, 212) nach Anspruch 1, wobei in der Rohwasserzirkulationsleitung (160) abschnittsweise ein Rohwasserspeicherkanal (161) vorgesehen ist und die Solarwärmeabsorptionsvorrichtung (150, 210) an dem Rohwasserspeicherkanal (161) vorgesehen ist und die Solarwärmeabsorptionsvorrichtung (150, 210) eine an dem Rohwasserspeicherkanal (161) vorgesehene Metallplatte (151, 211) zur Übertragung von durch den Solarabsorber (152, 212) absorbierter Wärme auf das Rohwasser in dem Rohwasserspeicherkanal (161) und den an der Metallplatte (151, 211) vorgesehenen Solarabsorber (152, 212) zur Absorption der Solarwärme umfasst.

3. Vorrichtung zur Membrandestillation mit einem Solarabsorber (152, 212), umfassend:
einen mit einer Solarwärmeabsorptionsvorrichtung (150, 210) versehenen Rohwassertank (110) zur Versorgung eines Membrandestillationsmoduls (120) mit durch die Solarwärmeabsorptionsvorrichtung (150, 210) erhitztem Rohwasser;
das Membrandestillationsmodul (120) zur Herstellung von aufbereitetem Wasser aus dem Rohwasser durch einen Membrandestillationsprozess; und
einen Kühlmitteltank (130) zur Versorgung des Membrandestillationsmoduls (120) mit einem Kühlmittel und zum Auffangen des durch das Membrandestillationsmodul (120) hergestellten aufbereiteten Wassers,
wobei die Solarwärmeabsorptionsvorrichtung (150, 210) an einer Oberseite oder einer Seite des Rohwassertanks (110) vorgesehen ist,
wobei auf einer Seite des Rohwassertanks (110) ein Phasenübergangsmaterial (170, 220) vorgesehen ist und
das Phasenübergangsmaterial (170, 220) dazu ausgebildet ist, Wärme des Rohwassers zu absorbieren, und dazu ausgebildet ist, die Wärme zu speichern, wenn eine Temperatur des Rohwassers höher als ein Schmelzpunkt des Phasenübergangsmaterials (170, 220) zwischen 20 °C und 60 °C ist oder diesem entspricht, und dazu ausgebildet ist, die gespeicherte Wärme abzugeben, wenn die Temperatur des Rohwassers niedriger als der Schmelzpunkt des Phasenübergangsmaterials (170, 220) ist,
wobei an einer von einer Innenseite (111) des Rohwassertanks (110) beabstandeten Stelle eine Innenwand (112) vorgesehen ist und das Phasenübergangsmaterial (170, 220) in einem Zwischenraum zwischen der Innenseite (111) und der Innenwand (112) vorgesehen ist,
das zwischen der Innenseite (111) und der Innenwand (112) vorgesehene Phasenübergangsmaterial (170, 220) das Rohwasser des Rohwassertanks (110) umgibt und der Zwischenraum zwischen der Innenseite (111) und der Innenwand (112) von einem Raum, in dem das Rohwasser des Rohwassertanks (110) vorgesehen ist, räumlich getrennt ist.

4. Vorrichtung zur Membrandestillation mit einem Solarabsorber (152, 212) nach Anspruch 3, wobei die Solarwärmeabsorptionsvorrichtung (150, 210) eine an der Oberseite oder der Seite des Rohwassertanks (110) montierte Metallplatte (151, 211) zur Bereitstellung einer Aufnahme für den Solarabsorber (152, 212) und zur Sammlung von Solarwärme und den in einer Ausnehmung der Metallplatte (151, 211) vorgesehenen Solarabsorber (152, 212) zur Absorption der gesammelten Solarwärme umfasst.

5. Vorrichtung zur Membrandestillation mit einem Solarabsorber (152, 212) nach einem der Ansprüche 1 bis 4, wobei der Solarabsorber (152, 212) eine Struktur aufweist, in der eine Ti-MgF₂-Doppelschicht umfassend eine MgF₂-Schicht auf einer Ti-Schicht mehrfach wiederholt gestapelt ist.

6. Vorrichtung zur Membrandestillation mit einem Solarabsorber (152, 212) nach Anspruch 4, wobei die Metallplatte (151, 211) in einer Mitte die sich verjüngende Ausnehmung (211a) aufweist und der Solarabsorber (152, 212) in der Ausnehmung (211a) aufgenommen ist.

7. Vorrichtung zur Membrandestillation mit einem Solarabsorber (152, 212) nach Anspruch 1 oder 3, wobei das Phasenübergangsmaterial (170, 220) derart vorgesehen ist, dass das Phasenübergangsmaterial (170, 220) in Form einer Emulsion in einem Fluid gelöst ist oder eine Kapsel mit Phasenübergangsmaterial (170, 220) in einem Fluid dispergiert ist.

8. Vorrichtung zur Membrandestillation mit einem Solarabsorber (152, 212) nach einem der Ansprüche 1 bis 7, wobei das Membrandestillationsmodul (120) zur Destillation nach einem DCMD-Verfahren (Direct Contact Membrane Distillation), einem AGMD-Verfahren (Air Gap Membrane Distillation), einem VMD-Verfahren (Vacuum Membrane Distillation) und/oder einem SGMD-Verfahren (Sweep Gas Membrane Distillation) ausgebildet ist.

## Revendications

1. Appareil de distillation à membrane utilisant un absorbeur solaire (152, 212), comprenant :
une conduite de circulation d'eau brute (160) pour circuler de l'eau brute dans un réservoir d'eau brute ;
un dispositif d'absorption de chaleur solaire (150, 210) disposé d'un côté de la conduite de circulation d'eau brute (160) pour chauffer l'eau brute dans la conduite de circulation d'eau brute (160) ;
un réservoir d'eau brute (110) pour recevoir l'eau brute chauffée par le dispositif d'absorption de chaleur solaire (150, 210) par la conduite de circulation d'eau brute (160) et pour fournir l'eau brute à un module de distillation à membrane (120) ;
le module de distillation à membrane (120) pour produire de l'eau traitée à partir de l'eau brute par un processus de distillation à membrane ; et
un réservoir de liquide de refroidissement (130) pour fournir un liquide de refroidissement au module de distillation à membrane (120) et pour collecter l'eau traitée produite par le module de distillation à membrane (120),
dans lequel un matériau à changement de phase (170, 220) est disposé d'un côté du réservoir d'eau brute (110) et
le matériau à changement de phase (170, 220) est apte à absorber de la chaleur de l'eau brute et est apte à stocker la chaleur quand une température de l'eau brute est égale ou supérieure à un point de fusion du matériau à changement de phase (170, 220) d'entre 20 °C et 60 °C et est apte à libérer la chaleur stockée quand la température de l'eau brute est inférieure au point de fusion du matériau à changement de phase (170, 220),
dans lequel une paroi intérieure (112) est disposée à un endroit espacé d'une surface intérieure (111) du réservoir d'eau brute (110) et le matériau à changement de phase (170, 220) est disposé dans un espace entre la surface intérieure (111) et la paroi intérieure (112),
le matériau à changement de phase (170, 220) disposé entre la surface intérieure (111) et la paroi intérieure (112) entoure l'eau brute du réservoir d'eau brute (110) et
l'espace entre la surface intérieure (111) et la paroi intérieure (112) est séparé spatialement d'un espace dans lequel l'eau brute du réservoir d'eau brute (110) est disposée.

2. Appareil de distillation à membrane utilisant un absorbeur solaire (152, 212) selon la revendication 1, dans lequel un canal de stockage d'eau brute (161) est disposé dans une partie de la conduite de circulation d'eau brute (160) et le dispositif d'absorption de chaleur solaire (150, 210) est disposé sur le canal de stockage d'eau brute (161) et
le dispositif d'absorption de chaleur solaire (150, 210) comprend une plaque métallique (151, 211) disposée sur le canal de stockage d'eau brute (161) pour transférer de la chaleur solaire absorbée par l'absorbeur solaire (152, 212) à l'eau brute dans le canal de stockage d'eau brute (161) et l'absorbeur solaire (152, 212) disposé sur la plaque métallique (151, 211) pour absorber la chaleur solaire.

3. Appareil de distillation à membrane utilisant un absorbeur solaire (152, 212), comprenant :
un réservoir d'eau brute (110) muni d'un dispositif d'absorption de chaleur solaire (150, 210) pour fournir de l'eau brute chauffée par le dispositif d'absorption de chaleur solaire (150, 210) à un module de distillation à membrane (120) ;
le module de distillation à membrane (120) pour produire de l'eau traitée à partir de l'eau brute par un processus de distillation à membrane ; et
un réservoir de liquide de refroidissement (130) pour fournir un liquide de refroidissement au module de distillation à membrane (120) et pour collecter l'eau traitée produite par le module de distillation à membrane (120),
dans lequel le dispositif d'absorption de chaleur solaire (150, 210) est disposé sur une surface supérieure ou un côté du réservoir d'eau brute (110),
dans lequel un matériau à changement de phase (170, 220) est disposé d'un côté du réservoir d'eau brute (110) et
le matériau à changement de phase (170, 220) est apte à absorber de la chaleur de l'eau brute et est apte à stocker la chaleur quand une température de l'eau brute est égale ou supérieure à un point de fusion du matériau à changement de phase (170, 220) d'entre 20 °C et 60 °C et est apte à libérer la chaleur stockée quand la température de l'eau brute est inférieure au point de fusion du matériau à changement de phase (170, 220),
dans lequel une paroi intérieure (112) est disposée à un endroit espacé d'une surface intérieure (111) du réservoir d'eau brute (110) et le matériau à changement de phase (170, 220) est disposé dans un espace entre la surface intérieure (111) et la paroi intérieure (112),
le matériau à changement de phase (170, 220) disposé entre la surface intérieure (111) et la paroi intérieure (112) entoure l'eau brute du réservoir d'eau brute (110) et
l'espace entre la surface intérieure (111) et la paroi intérieure (112) est séparé spatialement d'un espace dans lequel l'eau brute du réservoir d'eau brute (110) est disposé.

4. Appareil de distillation à membrane utilisant un absorbeur solaire (152, 212) selon la revendication 3, dans lequel le dispositif d'absorption de chaleur solaire (150, 210) comprend une plaque métallique (151, 211) montée sur la surface supérieure ou le côté du réservoir d'eau brute (110) afin de fournir un logement pour l'absorbeur solaire (152, 212) et collecter de la chaleur solaire et l'absorbeur solaire (152, 212) disposé dans un évidement de la plaque métallique (151, 211) afin d'absorber la chaleur solaire collectée.

5. Appareil de distillation à membrane utilisant un absorbeur solaire (152, 212) selon l'une quelconque des revendications 1 à 4, dans lequel l'absorbeur solaire (152, 212) a une structure dans laquelle une couche double Ti-MgF₂ comprenant une couche MgF₂ sur une couche Ti est empilée plusieurs fois.

6. Appareil de distillation à membrane utilisant un absorbeur solaire (152, 212) selon la revendication 4, dans lequel la plaque métallique (151, 211) a l'évidement (211a) rétréci à un centre et l'absorbeur solaire (152, 212) est logé dans l'évidement (211a).

7. Appareil de distillation à membrane utilisant un absorbeur solaire (152, 212) selon la revendication 1 ou 3, dans lequel le matériau à changement de phase (170, 220) est disposé de telle manière que le matériau à changement de phase (170, 220) est dissolu dans un fluide en forme d'une émulsion ou une capsule en matériau à changement de phase (170, 220) est dispersée dans un fluide.

8. Appareil de distillation à membrane utilisant un absorbeur solaire (152, 212) selon l'une quelconque des revendications 1 à 7, dans lequel le module de distillation à membrane (120) a une configuration quelconque parmi une distillation à membrane à contact direct (DCMD), une distillation à membrane à fente d'air (AGMD), une distillation à membrane sous vide (VMD) et une distillation à membrane à gaz de balayage (SGMD).
